## Europäisches Patentamt

## European Patent Office

## Office européen des brevets

(19)

(11) Veröffentlichungsnummer: **0 052 375**
**B1**

(12)

# EUROPÄISCHE PATENTSCHRIFT

(45) Veröffentlichungstag der Patentschrift:
**01.02.84**

(51) Int. Cl.³: **A 01 D 55/22,** A 01 D 55/262

(21) Anmeldenummer: **81109740.1**

(22) Anmeldetag: **17.11.81**

(54) **Rasenmäher.**

(30) Priorität: **19.11.80 DE 3043695**

(43) Veröffentlichungstag der Anmeldung:
**26.05.82 Patentblatt 82/21**

(45) Bekanntmachung des Hinweises auf die Patenterteilung:
**01.02.84 Patentblatt 84/5**

(84) Benannte Vertragsstaaten:
**AT BE CH IT LI NL SE**

(56) Entgegenhaltungen:
**DE - A - 2 305 423**
**DE - C - 379 629**
**FR - A - 773 373**
**GB - A - 1 477 618**
**US - A - 4 048 791**

(73) Patentinhaber: **Wolf-Geräte GmbH, Gregor-Wolf-Strasse Postfach 860 und 880, D-5240 Betzdorf/Sieg (DE)**

(72) Erfinder: **Orth, Günter, Kapellenweg 19, D-5241 Birken (DE)**

(74) Vertreter: **Koch, Günther, Dipl.-Ing. et al, Kaufingerstrasse 8, D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Rasenmäher

Die Erfindung betrifft einen Rasenmäher mit wenigstens einem Messerbalken am vorderen Ende eines Schwingarms, der um eine in Fahrtrichtung des Mähers verlaufende Mittelachse in einem begrenzten Winkelbereich gegenüber dem Chassis durch einen Antriebsmotor in Schwingbewegungen um eine vertikale, chassisfeste Achse versetzbar ist. Eine solche Schneidevorrichtung für Mais- und dergleichen Erntemaschinen ist aus der DE-C-379 629 bekannt. Hierbei sind die beiden gegenläufigen Schwingarme um einen mittleren gemeinsamen chassisfesten Zapfen schwenkbar und die hinteren Enden der Schwingarme tragen Führungsrollen, die in eine Kulissenführung einer Trommel einstehen, welche von einer querverlaufenden Antriebswelle getragen wird.

Der Erfindung liegt die Aufgabe zugrunde, bei einem derartigen Rasenmäher den Antrieb unter Fortfall der kompliziert gestalteten Kulissenführung zu vereinfachen und einen für den Hausgebrauch geeigneten Rasenmäher zu schaffen, der leicht von Gewicht ist und sich selbst bei tiefem Gras leicht führen läßt.

Gelöst wird die gestellte Aufgabe dadurch, daß über eine chassisfest gelagerte Antriebsriemenscheibe ein endloser Riemen läuft, der über eine am vorderen Ende des Schwingarmes drehbar gelagerte Umlenkriemenscheibe und eine dazwischen angeordnete Exzenterriemenscheibe geführt ist, deren Exzenterachse chassisfest ist.

Dieser Riemenantrieb gewährleistet einen ruhigen reibungsarmen periodischen Lauf des Schwingarms, der über den elastischen Keilriemen periodisch einer Schwingbewegung unterworfen wird.

Es ist zwar durch die DE-A-2 305 423 bereits eine Mähvorrichtung bekannt, bei der ein Exzenterantrieb den Mähbalken hin- und hergehend bewegt. Dieser Exzenterantrieb besteht jedoch aus einer zentrisch gelagerten Riemenscheibe, die von einem über die Zapfwelle eines Schleppers geführten Riemen angetrieben wird und einen Exzenterzapfen aufweist, der in ein Kulissenlangloch eines den Messerbalken bewegenden Mitnehmers eingreift. Im Gegensatz zu diesem und anderen bekannten, mit Exzenter arbeitenden Antrieben läuft bei dem erfindungsgemäßen Antrieb der Exzenter nicht am Schwingarm oder einer Kulissenführung dieses Schwingarmes ab, was eine Gleitberührung erfordert, sondern es findet ein Reibungseingriff zwischen Riemen und Riemenscheibe statt, und es erfolgt eine drehzahlabhängige Schwingbewegung ohne Gleitbewegung des Exzenters längs des Riemens.

Bei einer Doppelanordnung der Messerbalken können beide Messer entgegengesetztsinnig durch einen gleich aufgebauten Antrieb in Schwingbewegung versetzt werden. Es ist jedoch auch möglich, eines der Messer still zu setzen und dieses mit einem beweglichen Messer zusammenwirken zu lassen, wobei auch ein scherenartiger Eingriff mit mehreren Scherenmessern möglich ist.

Weitere Ausgestaltungen der Erfindung ergeben sich aus den Unteransprüchen 2 bis 8.

Nachstehend wird ein Ausführungsbeispiel der Erfindung anhand der Zeichnung beschrieben. In der Zeichnung zeigt

Fig. 1 eine schematische Seitenansicht eines erfindungsgemäß ausgebildeten Rasenmähers und

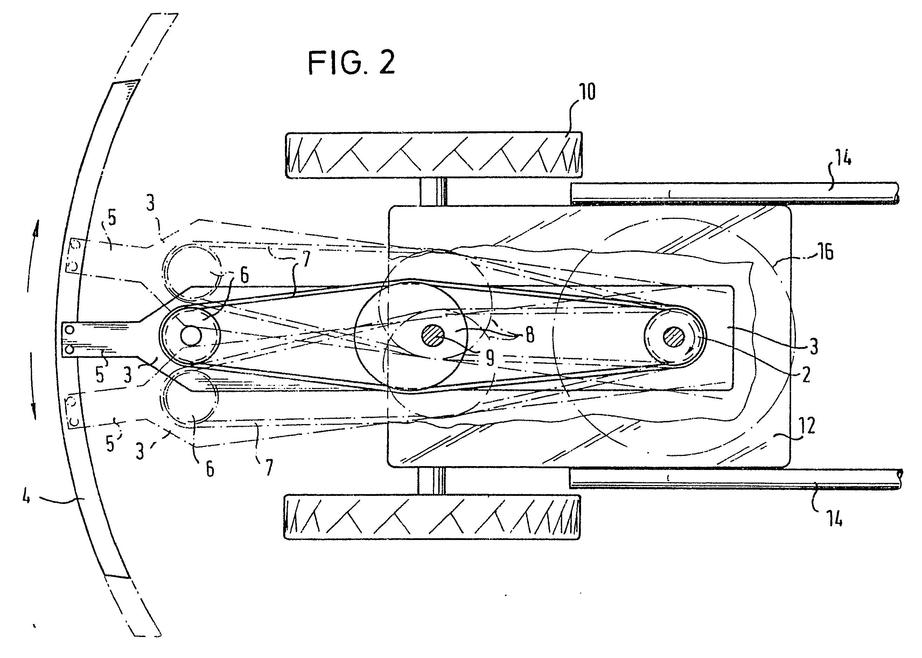

Fig. 2 eine Grundrißansicht des in Fig. 1 dargestellten Rasenmähers.

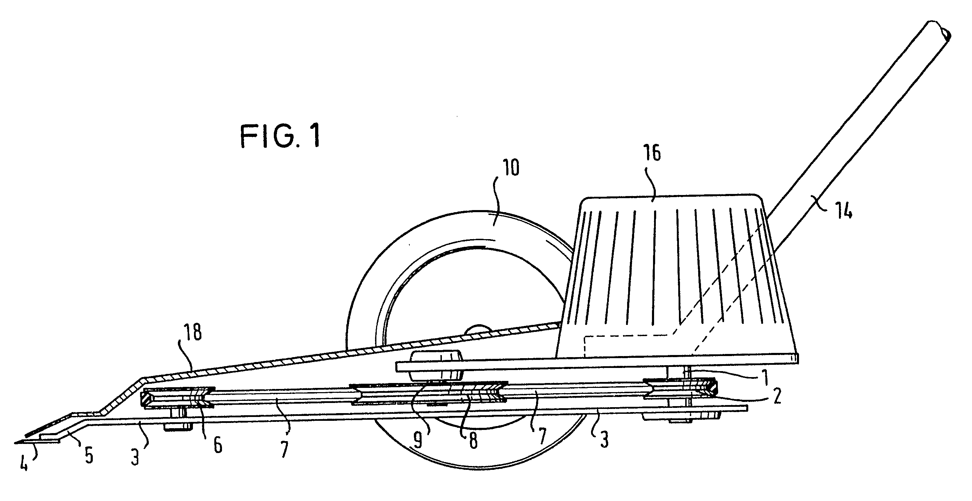

Der Rasenmäher weist ein von zwei Rädern 10 getragenes Chassis 12 auf, an welchem nach hinten weisend ein Bedienungsbügel 14 ansetzt. Auf dem Chassis 12 ist hinter der Radachse ein Motor 16 mit vertikaler Abtriebswelle 1 aufgebaut. Auf dieser Abtriebswelle 1 sitzt eine Antriebskeilriemenscheibe 2 und um diese Abtriebswelle des Motors 16 ist über ein Kugellager ein Schwingarm 3 konzentrisch zur Achse der Motorabtriebswelle 1 schwenkbar gelagert. Der Schwingarm 3 weist an seinem der Schwenklagerung entgegengesetzten vorderen Ende einen Messerhalter 5 auf, der einen sichelförmigen Messerbalken 4 haltert, welcher ein kreisbogenförmige Schneide besitzt, deren Krümmungsmittelpunkt mit der Schwenkachse des Schwingarmes 3 zusammenfällt. Diese Schneide weist in Fahrtrichtung nach vorn. Am vorderen Abschnitt des Schwingarmes 3 lagert diese eine Umlenk-Keilriemenscheibe 6, deren Durchmesser etwa dem Durchmesser der Antriebskeilriemenscheibe 2 entspricht. Über die Keilriemenscheiben 2 und 6 ist ein endloser Keilriemen 7 geführt. Dieser läuft in dem Bereich zwischen den Keilriemenscheiben 2 und 6 über eine Exzenter-Keilriemenscheibe 8, die einen größeren Durchmesser als die Riemenscheiben 2 und 6 aufweist, und die über eine exzentrische Drehachse 9 im Chassis 12 gelagert ist. Diese Exzenterachse 9 kann, wie aus Fig. 1 ersichtlich, von einer über dem Keilriemen 7 angeordneten mit dem Motor 16 fest verbundenen Platte getragen werden. Der Bewegungsmechanismus ist oberseitig durch eine Schutzabdeckung 18 aus Blech abgedeckt.

Die Abtriebswelle 1 des Motors treibt die Antriebskeilriemenscheibe 2 an, und der auf diese Weise bewegte Keilriemen läuft über die Exzenter-Keilriemenscheibe 8, die sich dadurch um ihre Exzenterachse 9 dreht, was zur Folge hat, daß der Keilriemen und mit ihm der Schwingarm 3 beidseitig zur Mittelachse um die vertikale Schwenkachse ausgelenkt wird. Das Ausmaß der Auslenkung hängt von der Exzentrizität der Exzenter-Keilriemenscheibe 8 bzw. dem Durchmesserunterschied der Riemenscheiben 2, 6 bzw. 8 ab.

Durch diese Schwingbewegung wird der Messerbalken 4 in schwingende Bewegung auf einem Kreisbogen versetzt, wobei der Schwingbereich größer sein kann als die Mäherbreite.

Anstelle des einen Messerbalkens können durch einen entsprechend verdoppelten Antrieb auch zwei gegensinnig bewegte Messerbalken Anwendung finden.

Der Antrieb kann durch Elektromotor oder Verbrennungskraftmotor erfolgen.

## Patentansprüche

1. Rasenmäher mit wenigstens einem Messerbalken (4) am vorderen Ende eines Schwingarms (3), der um eine in Fahrtrichtung des Mähers verlaufende Mittelachse in einem begrenzten Winkelbereich gegenüber dem Chassis (12) durch einen Antriebsmotor (16) in Schwingbewegungen um eine vertikale, chassisfeste Achse (1) versetzbar ist, dadurch gekennzeichnet, daß über eine chassisfest gelagerte Antriebsriemenscheibe (2) ein endloser Riemen (7) läuft, der über eine am vorderen Ende des Schwingarmes (3) drehbar gelagerte Umlenkriemenscheibe (6) und eine dazwischen angeordnete Exzenterriemenscheibe (8) geführt ist, deren Exzenterachse (9) chassisfest ist.

2. Rasenmäher nach Anspruch 1, dadurch gekennzeichnet, daß die Antriebsriemenscheibe (2) auf die Abtriebswelle (1) des Antriebsmotors (16) aufgesetzt ist.

3. Rasenmäher nach den Ansprüchen 1 und 2, dadurch gekennzeichnet, daß der Schwingarm (3) koaxial zur Antriebsriemenscheibe (2) schwenkbar gelagert ist.

4. Rasenmäher nach einem der Ansprüche 1 bis 3, dadurch gekennzeichnet, daß die Exzenterriemenscheibe (8) einen größeren Durchmesser aufweist als die Antriebsriemenscheibe (2) und die Umlenkriemenscheibe (6).

5. Rasenmäher nach einem der Ansprüche 1 bis 4, dadurch gekennzeichnet, daß die Riemenscheiben (2, 6, 8) als Keilriemenscheiben ausgebildet sind, über die ein Keilriemen (7) läuft.

6. Rasenmäher nach Anspruch 1, dadurch gekennzeichnet, daß der Messerbalken (4) eine in Fahrtrichtung nach vorn weisende Schneide in Form eines Kreisbogenabschnitts aufweist.

7. Rasenmäher nach Anspruch 6, dadurch gekennzeichnet, daß die Schneidkante des Messerbalkens (4) gezahnt ist.

8. Rasenmäher nach einem der Ansprüche 1 bis 7, dadurch gekennzeichnet, daß zwei Messerbalken an gegenläufig schwingenden Armen (3) befestigt sind, deren Schneidkanten im wesentlichen auf dem gleichen Bogenabschnitt verlaufen.

## Claims

1. A lawnmower with at least one knife beam (4) at the front end of a swing arm (3) which can be set into oscillatory movements by a drive motor (16) in a restricted angular range relative to the chassis (12) about a central axis extending in the direction of travel of the mower and about a vertical axle (1) fixed relative to the chassis, characterised in that an endless belt (7) runs around a drive belt pulley (2) fixedly mounted relative to the chassis, with the belt being guided over a belt deflecting pulley (6) rotatably mounted at the front end of the swing arm (3) and over an eccentric belt pulley (8) arranged therebetween, and with the eccentric axle (9) of the eccentric belt pulley being fixed relative to the chassis.

2. A lawnmower in accordance with claim 1, characterised in that the drive belt pulley (2) is mounted on the output drive shaft (1) of the drive motor (16).

3. A lawnmower in accordance with claims 1 and 2, characterised in that the swing arm (3) is pivotally journalled coaxial to the drive belt pulley (2).

4. A lawnmover in accordance with one of the claims 1 to 3, characterised in that the eccentric pulley (8) has a larger diamter than the drive belt pulley (2) and the deflection pulley (6).

5. A lawnmower in accordance with one of the claims 1 to 4, characterised in that the belt pulleys (2, 6, 8) are constructed as V-belt pulleys over which a V-belt (7) runs.

6. A lawnmower in accordance with claim 1, characterised in that the knife beam (4) has a cutting edge which points forward in the direction of travel in the form of a section of a circular arc.

7. A lawnmower in accordance with claim 6, characterised in that the cutting edge of the knife beam (4) is toothed.

8. A lawnmower in accordance with one of the claims 1 to 7, characterised in that two knife beams are secured to contra-oscillating arms (3) the cutting edges of which extend substantially over the same section of arc.

## Revendications

1. Tondeuse à gazon comprenant au moins une barre de coupe (4) située à l'extrémité antérieure d'un bras oscillant (3), qui est entraîné, par un moteur de commande (16), en mouvements oscillatoires par rapport au châssis (12) de part et d'autre d'un axe central orienté dans le sens d'avancement de la tondeuse, mouvements qui s'effectuent dans un secteur limité, autour d'un axe vertical (1) solidaire du châssis, caractérisée en ce qu'une courroie sans fin (7) passe sur une poulie de commande (2) solidaire du châssis, courroie qui est guidée sur une poulie de renvoi (6) montée à rotation à l'entrémité antérieure du bras oscillant (3) et sur une poulie excentrée (8) disposée entre les deux premières poulies et dont l'axe d'excentration (9) est solidaire du châssis.

2. Tondeuse à gazon suivant la revendication 1

caractérisée en ce que la poulie de commande (2) est calée sur l'arbre récepteur (1) du moteur de commande (16).

3. Tondeuse à gazon suivant les revendiations 1 à 3, caractérisée en ce que le bras oscillant (3) est monté à pivotement, coaxialement par rapport à la poulie de commande (2).

4. Tondeuse à gazon suivant les revendications 1 à 3, caractérisée en ce que la poulie excentrique (8) présente un plus grand diamètre que la poulie de commande (2) et que la poulie de renvoi (6).

5. Tondeuse à ganzon suivant une quelconque des revendications 1 à 4, caractérisée en ce que les poulies (2, 6, 8) sont conformées en poulies à gorge trapézoïdale, sur lesquelles passe une courroie trapézoïdale (7).

6. Tondeuse à gazon suivant la revendication 1, caractérisée en ce que la barre de coupe (4) présente un tranchant en forme de segment d'arc de cercle, orienté vers l'avant, en considérant le sens d'avancement.

7. Tondeuse à gazon suivant la revendication 6, caractérisée en ce que l'arête tranchante de la barre de coupe (4) est dentée.

8. Tondeuse à gazon suivant les revendications de 1 à 7, caractérisée en ce que deux barres de coupe sont fixées à des bras oscillants (3) animés de mouvement opposés, dont les arêtes tranchantes suivent sensiblement le même segment d'arc de cercle.

FIG. 1

# FIG. 2